# EUROPÄISCHE PATENTSCHRIFT

(11) **EP 1 502 880 B1**
(45) Veröffentlichungstag und Bekanntmachung des Hinweises auf die Patenterteilung: **28.06.2006**
(21) Anmeldenummer: 04015176.3
(22) Anmeldetag: 29.06.2004
(51) Int. Cl.: B65G 1/10

(54) **Lager-und Kommissionieranlage**
Device for storing and collecting orders
Dispositif de stockage et de commission de commandes

(30) Priorität: 29.07.2003 DE 20311785 U
(43) Veröffentlichungstag der Anmeldung: 02.02.2005
(73) Patentinhaber: Fritz Schäfer GmbH, 57290 Neunkirchen (DE)
(72) Erfinder: Schäfer, Gerhard, 57290 Neunkirchen (DE)
(74) Vertreter: Valentin, Ekkehard

(56) Entgegenhaltungen:
- AT-B- 348 930
- DE-U- 20 315 078
- GB-A- 1 124 673
- US-A- 3 828 680

## Beschreibung

Die Erfindung betrifft eine Lager- und Kommissionieranlage, bestehend aus mehreren Regalreihen mit jeweils mehreren übereinander vorgesehenen Lagerebenen, wobei die Regalreihen auf einer Bodenfläche parallel angeordnet sind und zwischen benachbarten Regalreihen eine Regalgasse vorhanden ist.

Bekannte Lager- und Kommissionierungssysteme bzw. -anlagen zur Aufnahme von beispielsweise Paletten, Behältern oder Kleinteilen bestehen aus Regalreihen, in denen eine Vielzahl von Stellplätzen entlang einer Regalreihe auf mehreren übereinander aufgebauten Lagerebenen vorgesehen sind.

Zwischen zwei Regalreihen befindet sich eine Regalgasse, deren Breite so ausgelegt ist, dass ein Regalbediengerät, beispielsweise ein Stapler, in die Regalgasse einfahren kann, um eine Palette oder einen Behälter aus einem der Stellplätze zu entnehmen oder einzustellen. Jeder Stellplatz eines solchen Lager- und Kommissionierungssystems ist frei zugänglich. Eine Lager- und Kommissionieranlage mit solch einer Anordnung der Regalreihen erfordert sehr viel Platz und damit eine entsprechend große Halle.

Es ist deshalb bekannt, Regalgassen mit einer geringeren Breite auszubilden, um zusätzliche Regalreihen aufstellen zu können. In einem derartigen Schmalganglager können aber nur spezielle Regalbediengeräte eingesetzt werden.

Bei einer anderen bekannten Ausführung werden komplette Regalreihen horizontal derart verschoben, dass die Zahl der Regalgassen reduziert wird. In einem derartigen Lager- und Kommissionierungssystem werden beliebig viele Regalreihen auf Fahrwagen montiert und beispielsweise elektromotorisch auf Schienen verfahren. Eine Regalgasse wird nur geöffnet / gebildet, wo sie gerade benötigt wird. Je nach Größe eines solchen Lager- und Kommissionierungssystems ist nur eine Regalgasse vorhanden, während die übrigen Regalreihen ohne Abstand zueinander positioniert sind.

Derartige Lager- und Kommissionierungssysteme bzw. -anlagen sind beispielsweise aus der AT 348 930 B1 der DE 42 13 835 A1, der DE 84 05 892 U1 und der DE 94 06 352 U1 bekannt.

Nachteilig an einem solchen Lager- und Kommissionierungssystem ist, dass bei der Kommissionierung der direkte Zugang zu allen Stellplätzen innerhalb des Lagersystems nicht möglich ist. Die Regalgassen müssen nacheinander geöffnet werden, damit die Regalbediengeräte zu den entsprechenden Stellplätzen gelangen können.

Der Erfindung liegt daher die Aufgabe zugrunde, bei einer Lager- und Kommissionieranlage der eingangs genannten Art die Raumausnutzung zu erhöhen, ohne die Möglichkeit einer Kommissionierung einzuschränken.

Diese Aufgabe wird erfindungsgemäß dadurch gelöst, dass in den Regalgassen in einem Höhenabstand zur Bodenfläche horizontal verschiebbare Regalsysteme angeordnet sind. Hiermit lässt sich erreichen, dass der in den Regalgassen immanent vorhandene Freiraum als Lagerraum genutzt werden kann, und zwar nach einer bevorzugten Ausführung der Erfindung der gesamte Raum ab einer Höhe von der Bodenfläche, die unverändert eine freie Verfahrbarkeit eines Regalbediengerätes in der Regalgasse unterhalb der verschiebbaren Regalsysteme erlaubt. Dem Regalbediengerät sind alle Stellplätze zugänglich, wozu zur Entnahme von Lagergut aus den hohen Ebenen der zu der Regalgasse benachbarten Regalreihen lediglich die entsprechenden verschiebbaren, zusätzlichen Regalsysteme der Regalgasse auf Lücke verfahren werden müssen, d.h. voneinander entfernt werden müssen. Da bei einer herkömmlichen Lageranlage abgesehen von dem Einbau von in den Regalgassen zusätzlichen veschiebbaren Regalsystemen keine weiteren Änderungen vorgenommen zu werden brauchen, lässt sich eine erfindungsgemäße Kompaktanlage in einfacher Weise nachträglich in bestehende Lager- und Kommissionieranlagen vorsehen.
Die zusätzlichen verschiebbaren Regalsysteme lassen sich vorteilhaft auf Schienen anordnen und nach Vorschlägen der Erfindung einzeln oder als zusammengekoppelte Einheiten verfahren. Als Verfahrantrieb eignen sich externe Verschiebemittel, z.B. ein Regalbediengerät, oder direkt zugeordnete Antriebe. Zum Schutz vor eventuell herabfallenden Teilen können in den Regalgassen unterhalb der zusätzlichen, verschiebbaren Regalsysteme temporär einzubringende Schutzelemente vorgesehen werden, beispielsweise horizontal aus den Regalreihen oder den verschiebbaren Regalsystemen herausziehbare Bleche, Gitter, Netze oder dergleichen.

Andere vorteilhafte Ausgestaltungen des erfindungsgemäßen Lager- und Kommissionierungssystems sind in den Unteransprüchen angegeben.

Weitere Einzelheiten und Merkmale der Erfindung ergeben sich aus den Ansprüchen und der nachfolgenden Beschreibung, in der ein in den Zeichnungen sehr schematisch dargestelltes Ausführungsbeispiel des Gegenstandes der Erfindung näher erläutert ist. Es zeigen:
- Fig. 1: eine Vorderansicht einer mehrgeschossigen Regalreihe einer Lager-und Kommissionieranlage;
- Fig. 2: eine Draufsicht einer Regalgasse, die zwischen rechts und links vorgesehenen Regalreihen sowie mit zusätzlichen, hochgelegenen verschiebbaren Regalsystemen ausgebildet ist; und
- Fig. 3: einen Schnitt entlang der Linie III - III von Fig. 2.

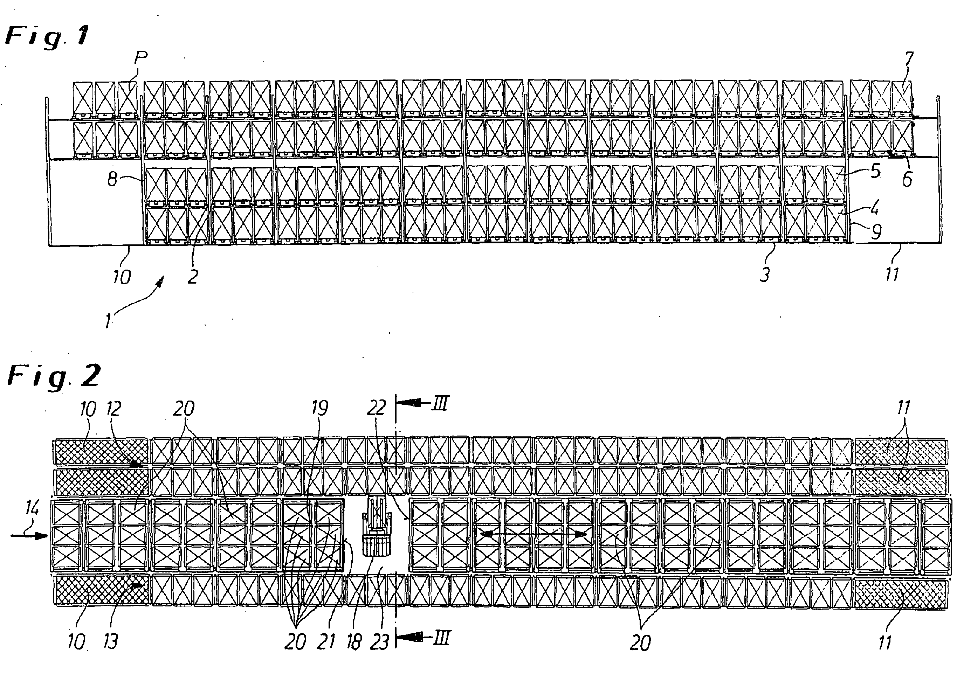

Eine in Fig. 1 dargestellte Regalreihe 2 einer Lager- und Kommissionieranlage 1 ist auf einer Bodenfläche 3 ( Fundament ) aufgestellt. Die Regalreihe 2 besitzt in mehreren übereinander vorgesehenen Lagerebenen 4, 5, 6, 7 zahlreiche Stellplätze zur Aufnahme von beispielsweise Paletten P. Sie wird in Längsrichtung von den äußeren Regalständem 8, 9 begrenzt. Neben dem linken und dem rechten Ende der Regalreihe 2 befinden sich jeweils Umsetzgänge 10, 11.

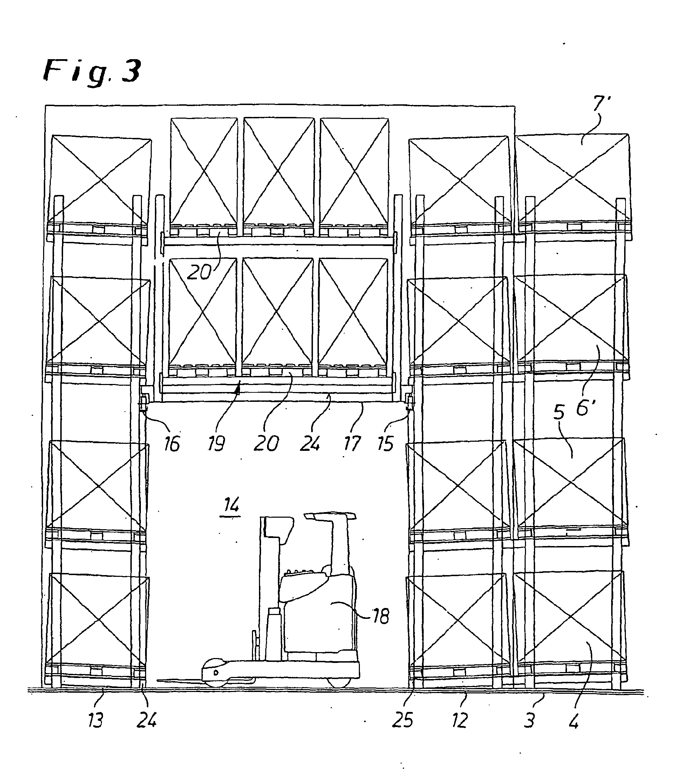

Wie der Fig. 2 zu entnehmen ist, verläuft bei dieser Ausführung zwischen einer rechten Regalreihe 12 mit Doppel-Regalanordnung und einer linken Regalreihe 13 eine Regalgasse 14, welche beispielsweise mit einem Flurförderfahrzeug 18 befahren werden kann. Die Regalreihen 12, 13 können auch doppelt tief sein und waagerechte Ebenen 4, 5 besitzen. Oberhalb des Flurförderfahrzeuges 18 sind in der Regalgasse 14 in einem entsprechenden Höhenabstand zur Bodenfläche 3 (vgl. Fig. 3) zusätzlich mehrere verschiebbare Regalsysteme 19 vorgesehen. Ein solches verschiebbares Regalsystem 19 stellt in mehreren Lagerebenen 6', 7' zahlreiche weitere Stellplätze 20 bereit. Diese Stellplätze 20 in dem verschiebbaren Regalsystem 19 können sämtlich mit dem Flurförderfahrzeug 18 bedient werden.

Die Fig. 3 verdeutlicht, dass die Stellplätze der zwei unteren Lagerebenen 4 und 5 der Regalreihen 12 und 13 beidseitig der Regalgasse 14 immer frei zugänglich sind. Oberhalb der Lagerebene 5 sind im Abstand zur Bodenfläche 3 an der rechten und linken Regalreihe 12, 13 Schienen 15, 16 befestigt, auf denen das verschiebbare Regalsystem 19 mit den zusätzlichen Stellplätzen 20 in Längsrichtung der Regalgasse 14 verschiebbar angeordnet ist, wobei das Flurförderfahrzeug 18 das Verschieben in Längsrichtung durchführen kann. Eine Ausführung, bei der die verschiebbaren Regalsysteme 19 jeweils einen eigenen Antrieb oder einen zentralen Antrieb von unten oder von der Seite erhalten, ist auch möglich.

Um zu den Stellplätzen 20 der Regalgasse 14 zu gelangen, die aktuell nicht in einer durch Verschieben frei gemachten Zugangsposition 21 und 22 liegen, werden die verschiebbaren Regalsysteme 19 in Längsrichtung des Doppelpfeils (vgl. Fig. 2 ) entsprechend verschoben. Die verschiebbaren Regalsysteme 19 können dabei einzeln oder mehrere zusammengekoppelt verschoben werden. Durch das Verschieben bildet sich an einer gewünschten Stelle in der Regalgasse 14 eine Lücke 23 zwischen den verschiebbaren Regalsystemen 19, so dass sich beliebig neue, freie Zugangspositionen einstellen zu lassen.

Die Schienen 15, 16 können bei ausreichender Statik der Regalständer 24, 25 direkt an diesen befestigt werden. Alternativ besteht die Möglichkeit, die Schienen 15, 16 an einer ( nicht dargestellten ) zusätzlichen Stützkonstruktion anzuordnen, was von den jeweiligen örtlichen Gegebenheiten abhängig gemacht werden kann.

Um zu verhindern, dass aus den Stellplätzen 20 der oberen Lagerebenen 6', 7' der Regalgasse 14 Gegenstände in der Lücke 23 bis auf den Boden herabfallen, befinden sich in den verschiebbaren Regalsystemen 19 und / oder den Regalreihen 12, 13 horizontal herausziehbare Bleche, Netze oder Gitter; in Fig. 3 ist ein positioniertes Schutzelement 24 beispielhaft angedeutet. Altemativ kann ein solches Schutzelement separat vorgesehen und unter die zu öffnende Lücke gefahren werden, z.B. entlang bzw. auf den Schienenführungen.

## Patentansprüche

1. Lager- und Kommissionieranlage (1), bestehend aus mehreren Regalreihen (2, 12, 13) mit jeweils mehreren übereinander vorgesehenen Lagerebenen (4, 5, 6, 7 ), wobei die Regalreihen (2, 12, 13) auf einer Bodenfläche (3) parallel angeordnet sind und zwischen benachbarten Regalreihen (2, 12, 13) eine Regalgasse (14) vorhanden ist,
**dadurch gekennzeichnet,**
**dass** in den Regalgassen (14) in einem Höhenabstand zur Bodenfläche (3) horizontal verschiebbare Regalsysteme (19) angeordnet sind.

2. Lager- und Kommissionieranlage nach Anspruch 1,
**dadurch gekennzeichnet,**
**dass** den in der Höhe vorgesehenen Regalsystemen (19) Schienen (15, 16) zugeordnet sind.

3. Lager- und Kommissionieranlage nach Anspruch 1 oder 2,
**dadurch gekennzeichnet,**
**dass** der Abstand der Unterkante der verschiebbaren Regalsysteme (19) von der Bodenfläche (3) so groß ist, dass ein Fahr- und / oder Bedienungsgang unterhalb der verschiebbaren Regalssysteme (19) bereit steht.

4. Lager- und Kommissionieranlage nach Anspruch 2,
**dadurch gekennzeichnet,**
**dass** die Schienen (15, 16) der verschiebbaren Regalsysteme (19) an den Regalständem (24, 25) der Regalreihen (2, 12, 13) befestigt sind.

5. Lager- und Kommissionieranlage nach Anspruch 2,
**dadurch gekennzeichnet,**
**dass** die Schienen (15, 16) der verschiebbaren Regalsysteme (19) an einer von den Regalreihen (2, 12, 13) unabhängigen Stützkonstruktion befestigt sind.

6. Lager- und Kommissionieranlage nach Anspruch 2,
**dadurch gekennzeichnet,**
**dass** die Schienen (15, 16) für die verschiebbaren Regalsysteme (19) als Hängeschienen ausgebildet sind.

7. Lager- und Kommissionieranlage nach einem der Ansprüche 1 bis 6,
**dadurch gekennzeichnet,**
**dass** den verschiebbaren Regalsystemen (19) ein externes Verschiebemittel zugeordnet ist.

8. Lager- und Kommissionieranlage nach einem der Ansprüche 1 bis 6,
**dadurch gekennzeichnet,**
**dass** den verschiebbaren Regalsystemen (19) ein eigener Antrieb zugeordnet ist.

9. Lager- und Kommissionieranlage nach einem der Ansprüche 1 bis 8,
**dadurch gekennzeichnet,**
**dass** einzelne oder mehrere zusammengekoppelte Regalsysteme (19) verschiebbar sind.

10. Lager- und Kommissionieranlage nach einem der Ansprüche 1 bis 9,
**dadurch gekennzeichnet,**
**dass** eine zwischen verschiebbaren Regalsystemen (19) frei gemachte Lücke (23) durch ein horizontal aus den Regalreihen (2, 12, 13) und / oder den verschiebbaren Regalsystemen (19) herausziehbares Schutzelement (24) verschließbar ist.

## Claims

1. A warehousing and commissioning system (1) consisting of several rack bays (2, 12, 13), wherein said rack bays respectively feature several storage levels (4, 5, 6, 7) that are arranged on top of one another, and wherein the rack bays (2, 12, 13) are arranged parallel to one another on a floor area (3) and a rack aisle (14) is located between adjacent rack bays (2, 12, 13),
**characterized in**
**that** horizontally displaceable rack systems (19) are arranged in the rack aisles (14) at a certain vertical distance from the floor area (3).

2. The warehousing and commissioning system according to Claim 1,
**characterized in**
**that** rails (15, 16) are assigned to the elevated rack systems (19).

3. The warehousing and commissioning system according to Claim 1 or 2,
**characterized in**
**that** the distance between the bottom edge of the displaceable rack systems (19) and the floor area (3) is so large that a driving and/or operating aisle is available underneath the displaceable rack systems (19).

4. The warehousing and commissioning system according to Claim 2,
**characterized in**
**that** the rails (15, 16) of the displaceable rack systems (19) are mounted on the rack columns (24, 25) of the rack bays (2, 12, 13).

5. The warehousing and commissioning system according to Claim 2,
**characterized in**
**that** the rails (15, 16) of the displaceable rack systems (19) are mounted on a support construction that is realized separately of the rack bays (2, 12, 13).

6. The warehousing and commissioning system according to Claim 2,
**characterized in**
**that** the rails (15, 16) for the displaceable rack systems (19) are realized in the form of suspension rails.

7. The warehousing and commissioning system according to one of Claims 1-6,
**characterized in**
**that** an external displacing means is assigned to the displaceable rack systems (19).

8. The warehousing and commissioning system according to one of Claims 1-6,
**characterized in**
**that** a separate drive is assigned to the displaceable rack systems (19).

9. The warehousing and commissioning system according to one of Claims 1-8,
**characterized in**
**that** the rack systems (19) can be displaced individually or in the form of interconnected groups.

10. The warehousing and commissioning system according to one of Claims 1-9,
**characterized in**
**that** a gap (23) cleared between the displaceable rack systems (19) can be closed with a protective element (24) that can be horizontally pulled out of the rack bays (2, 12, 13) and/or the displaceable rack systems (19).

## Revendications

1. Installation de stockage et de préparation de commande (1), comprenant plusieurs rangées de rayonnages (2, 12, 13) avec respectivement plusieurs niveaux de stockage (4, 5, 6, 7) prévus les uns au-dessus des autres, les rangées de rayonnages (2, 12, 13) étant disposées parallèlement sur une surface de fond (3) et une travée de rayonnages (14) étant présente entre des rangées de rayonnages (2, 12, 13) voisines,
**caractérisé en ce que**
des systèmes de rayonnages (19) coulissants horizontalement sont disposés dans les travées de rayonnages (14) à une distance en hauteur de la surface de fond (3).

2. Installation de stockage et de préparation de commande selon la revendication 1,
**caractérisé en ce que**
des rails (15, 16) sont attribués aux systèmes de rayonnages (19) prévus en hauteur.

3. Installation de stockage et de préparation de commande selon la revendication 1 ou 2,
**caractérisé en ce que**
la distance du bord inférieur des systèmes de rayonnages (19) coulissants à la surface de fond (3) est si grande qu'un couloir de déplacement et/ou de manipulation est disponible au-dessous des systèmes de rayonnages (19) coulissants.

4. Dispositif de stockage et de préparation de commande selon la revendication 2,
**caractérisé en ce que**
les rails (15, 16) des systèmes de rayonnages (19) coulissants sont fixés sur les supports de rayonnages (24, 25) des rangées de rayonnages (2, 12, 13).

5. Installation de stockage et de préparation de commande selon la revendication 2,
**caractérisé en ce que**
les rails (15, 16) des systèmes de rayonnages (19) coulissants sont fixés sur une construction de soutien indépendante des rangées de rayonnages (2, 12, 13).

6. Installation de stockage et de préparation de commande selon la revendication 2,
**caractérisé en ce que**
les rails (15, 16) pour les systèmes de rayonnages (19) coulissants sont conçus comme des rails suspendus.

7. Installation de stockage et de préparation de commande selon l'une quelconque des revendications 1 à 6,
**caractérisé en ce que**
un moyen coulissant externe est attribué aux systèmes de rayonnages (19) coulissants.

8. Installation de stockage et de préparation de commande selon l'une quelconque des revendications 1 à 6,
**caractérisé en ce que**
un entraînement propre est attribué aux systèmes de rayonnages (19) coulissants.

9. Installation de stockage et de préparation de commande selon l'une quelconque des revendications 1 à 8,
**caractérisé en ce que**
des systèmes de rayonnages (19) individuels ou plusieurs systèmes de rayonnages couplés ensemble sont coulissants.

10. Installation de stockage et de préparation de commande selon l'une quelconque des revendications 1 à 9,
**caractérisé en ce que**
un vide (23) libéré entre des systèmes de rayonnages (19) coulissants peut être fermé par un élément de protection (24) pouvant être sorti horizontalement des rangées de rayonnages (2, 12, 13) et/ou les systèmes de rayonnages (19) coulissants.
